# EUROPÄISCHE PATENTSCHRIFT

(11) **EP 2 640 492 B1**
(45) Veröffentlichungstag und Bekanntmachung des Hinweises auf die Patenterteilung: **18.03.2015**
(21) Anmeldenummer: 12708703.9
(22) Anmeldetag: 17.01.2012
(51) Int. Cl.: B01D 53/96, B08B 7/00, B01D 53/14

(54) **VORRICHTUNG UND VERFAHREN ZUM AUFREINIGEN EINES MIT NITROSAMIN VERUNREINIGTEN PRODUKTES EINER CO2-CAPTURE-ANLAGE**
APPARATUS AND PROCESS FOR PURIFICATION OF A NITROSAMINE-CONTAMINATED PRODUCT FROM A CO2-CAPTURE-PLANT
DISPOSITIF ET PROCÉDÉ POUR ÉPURER UN PRODUIT CONTAMINÉ PAR DE LA NITROSAMINE DANS UNE INSTALLATION DE CAPTAGE DE CO2

(30) Priorität: 31.01.2011 EP 11152679
(43) Veröffentlichungstag der Anmeldung: 25.09.2013
(73) Patentinhaber: Siemens Aktiengesellschaft, 80333 München (DE)
(72) Erfinder: FISCHER, Björn, 60318 Frankfurt a. M. (DE); JOH, Ralph, 63500 Seligenstadt (DE); SCHNEIDER, Rüdiger, 65817 Eppstein (DE); GILLING, Erwin, Johannes, Martinus, NL-2625 AS Delft (NL); GOETHEER, Earl, Lawrence, Vincent, B-2200 Mol (BE); URBANUS, Jan, Harm, NL-3622 EW Loenen aan de Vecht (NL)
(86) Internationale Anmeldenummer: PCT/EP2012/050593
(87) Internationale Veröffentlichungsnummer: WO 2012/104137

(56) Entgegenhaltungen:
- WO-A1-01/65954
- WO-A1-2006/011179
- WO-A1-2010/102877
- DE-A1- 3 726 698
- US-A- 6 068 823

## Beschreibung

Die Erfindung betrifft eine Vorrichtung und ein Verfahren zum Aufreinigen eines mit Nitrosamin verunreinigten Produktes aus dem CO₂ Capture-Prozess einer fossil befeuerten Kraftwerksanlage.

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Lösungsmittel aus dem Rauchgas herausgewaschen (CO₂ Capture Prozess).

Gebräuchliche chemische Lösungsmittel, wie beispielsweise Methanolamin (MEA), zeigen eine gute Selektivität und eine hohe Kapazität für Kohlendioxid (CO₂). Aminbasierte Lösungsmittel binden jedoch auch irreversibel saure Rauchgasnebenkomponenten (heat-stabil salts) und weitere Abbauprodukte (Degradationsprodukte) wie Schwefeldioxid SO₂ oder Schwefeltrioxid SO₃ in Form von Sulfit und Sulfat und beeinträchtigen dadurch im Laufe des Prozesses zunehmend die Wirksamkeit des Lösungsmittels. Um diesem Problem zu begegnen, besteht bei Lösungsmitteln, basierend auf Aminosäuren, die Möglichkeit einer Aufbereitung durch Destillation. Dabei wird das Lösungsmittel erwärmt, sodass die leicht flüchtigen Amine verdampfen und durch Kondensation zurück gewonnen und dadurch von den schwer siedenden Verunreinigungen abgetrennt werden.

Ein viel schwerwiegenderes Problem entsteht im CO₂ Capture Prozess durch die Verbindung von Aminen mit Stickoxiden NOₓ. Auch wenn die Konzentration an Stickoxiden NOₓ im Rauchgas vergleichsweise gering ist, bilden Amine mit Stickoxiden NOₓ direkt oder über Nebenreaktionen auf Organismen karzinogen wirkende Nitrosoamine. Diese Nitrosamine weisen einen sehr geringen Dampfdruck auf, weshalb sie über das Rauchgas mit in die Atmosphäre ausgetragen werden.

In der Öffentlichkeit stehen Nitrosamine unter hoher Beachtung, da sie in Nahrungsmitteln (insbesondere bei unsachgemäßer Zubereitung) vorkommen können und in der überwiegenden Zahl als krebserregend angesehen werden. Daher sind Nitrosamine sicherheitsrelevant für den Betrieb von CO₂ Capture-Anlagen mit Amin-basierten Lösungsmitteln. Eine Minimierung der Nitrosaminkonzentration im CO₂ Capture-Prozess ist daher von großer Wichtigkeit für die Akzeptanz der Technologie in der Öffentlichkeit.

Bevorzugt findet die Bildung von Nitrosaminen unter sauren Bedingungen statt (pH < 7). Dennoch erfolgt die Bildung von Nitrosaminen auch bei stark alkalischen Bedingungen. Dadurch reichert sich im CO₂ Capture-Prozess mit der Zeit eine hohe Konzentration an Nitrosamninen an. Eine besondere Eigenschaft von Nitrosaminen ist deren geringe thermische Stabilität, die man sich z.B. bei Analyseverfahren zunutze macht und statt der Nitrosamine selbst, deren typische Zerfallsprodukte bei hoher Erhitzung detektiert. Eine thermische Behandlung des Lösungsmittels zur Zerstörung der Nitrosamine ist jedoch nicht möglich, da die waschaktiven Amine in dem verwendeten Lösungsmitteln ebenfalls nicht thermisch stabil sind, und durch eine thermische Behandlung ebenfalls zerstört würden. Dies gilt es jedoch unbedingt zu vermeiden.

Auch bei der destillativen Aufreinigung von Amin-basierten Lösungsmitteln oder Lösungsmittelprodukten zur Abtrennung von Degradationsprodukten bereiten Nitrosamine Schwierigkeiten. Die Destillation findet in der Regel bei Temperaturen von unter 150 °C statt. Dabei verdampfen in einem Verdampfer die leicht flüchtigen Amine, und die störenden Rückstände werden als Verdampfungsrückstände abgetrennt. Aufgrund des höheren Molekulargewichts der Nitrosamine bleibt in Abhängigkeit von deren jeweiligen Dampfdruck in dem Verdampfungsrückstand jedoch auch immer ein Teil der Nitrosamine zurück, da Nitrosamine einen geringeren Dampfdruck als die entsprechenden Amine zeigen. Der Verdampfungsrückstand enthält daher einen nennenswerten Anteil an Nitrosaminen und muss kostenaufwendig entsorgt werden. Ebenso bleiben im aufgereinigten Lösungsmittel Nitrosamine zurück.

Bei der Verwendung von Aminosäuresalzen als aktive Waschsubstanz in einem Lösungsmittel, ist der Weg der Verdampfung zur Beseitigung der Degradationsprodukte im Lösungsmittel nicht möglich, da Aminosäuresalze keinen nennenswerten Dampfdruck zeigen. Hier ist allerdings eine Regenerierung des Lösungsmittels durch Kristallisation möglich. Die Nitrosamine wirken sich jedoch auch negativ auf den Regenerierungsprozess aus und belasten zudem die Abfallprodukte, die deswegen kostenaufwendig als Sondermüll entsorgt werden müssen. Wenngleich bei der Verwendung von Aminosäuresalzen die Emissionen der Nitrosamine über das gereinigte Rauchgas ausgeschlossen ist, wäre eine Reduzierung der Nitrosamine auf möglichst geringes Maß von großem Vorteil.

Bisher sind weder in der Prozesstechnik, noch in der Kraftwerks- bzw. CO₂ Capture-Technologie Verfahren bekannt, wie Nitrosamine aus Lösungsmitteln oder Lösungsmittelprodukten entfernt werden können, ohne dass die aktiven Aminosäuren des Lösungsmittels zerstört werden, bzw. ohne dass Nitrosaminhaltige Rückstände oder Abfallprodukte anfallen.

Aus der WO 2010/102877 A1 gemäß dem Oberbegriff des Anspruchs 1 und Anspruch 11 ist ein Verfahren und eine Vorrichtung zum Aufreinigen eines mitunter auch mit Nitrosaminen verunreinigten Lösungsmittels einer CO₂ Capture-Anlage bekannt. Ziel dabei ist es, das Entweichen von Aminen in die Umwelt zu vermeiden bzw. zu verhindern. Dazu wird die Waschlösung einem Reclaimer zugeführt, in welchem ein Teil der Lösungsbestandteile wieder als freie Amine zurück gewonnen werden, um diese an den Waschprozess erneut zurück zu führen. Die thermische Energie zur Behandlung zur Abscheidung der leichter flüchtigen Amine aus der Waschlösung wird Prozessdampf entnommen. Nicht beschrieben ist wie bereits gebildete Nitrosamine beseitigt werden können.

Aufgabe der Erfindung ist es daher ein Verfahren anzugeben, durch welches sich Nitrosamine aus einem Produkt, insbesondere einem Lösungsmittel mit einer auf Amin-basierten, aktiven Substanz effizient beseitigen lassen, ohne dass die Amine zerstört werden, und ohne dass eine kostenaufwendige Entsorgung der Degradationsprodukte erforderlich ist. Zudem gilt es die Nachteile aus dem Stand der Technik zu vermeiden. Außerdem ist es Aufgabe der Erfindung, eine Vorrichtung anzugeben, an der das erfindungsgemäße Verfahren ausführbar ist.

Die auf ein Verfahren gerichtete Aufgabe der Erfindung wird gelöst durch die Merkmale des Anspruchs 1.

Demnach wird bei dem Verfahren zum Aufreinigen eines mit Nitrosaminen verunreinigten Lösungsmittels als Produkt einer CO₂-Capture-Anlage, das verunreinigte Produkt auf eine Temperatur T erwärmt, bei der die Nitrosamine thermisch zerstört werden, wobei die Temperatur T höher ist als die maximale Temperatur in der CO₂-Capture-Anlage, wobei die Temperatur T für eine Verweilzeit t gehalten wird, und wobei das Lösungsmittel aus einem CO₂ Capture-Prozess einer fossil befeuerten Kraftwerksanlage entnommen wird, und wobei das verunreinigte Lösungsmittel mindestens die Konzentration an Nitrosamin enthält, die im CO₂ Capture-Prozess gebildet wird.

Die Erfindung macht sich dabei die geringe thermische Stabilität von Nitrosaminen zunutze, sodass die Nitrosamine durch Erwärmen zerstört werden. Selbst für den Fachmann ist dies zunächst nicht naheliegend. Denn bei den Temperaturen, ab denen eine thermische Zerstörung von Nitrosaminen effektiv einsetzt, findet bereits auch eine Schädigung der für die CO₂ Wäsche erforderlichen aktiven Aminosäure statt.

Um die Aminosäure nicht zu schädigen, wird erfindungsgemäß eine Temperatur gewählt, bei der zwar eine thermische Zerstörung der Nitrosamine erfolgt, jedoch die Aminosäure als aktive Substanz weitgehend unbeschadet erhalten bleibt. Diese Temperatur kann jedoch vergleichsweise niedrig sein, sodass das verunreinigte Lösungsmittel für eine der Temperatur entsprechende Verweilzeit gehalten werden muss, um die Nitrosamine möglichst umfassend zu zerstören. Die Höhe der Temperatur, und die damit verbundene, erforderliche Verweilzeit t ist dabei unter Anderem abhängig von dem in dem Lösungsmittel gelösten Amin. Geeignete Amine sind beispielsweise Alkanolamine, Aminosäuren oder Aminosäuresalze.

Kern der Erfindung ist also insbesondere die Erkenntnis, dass die thermische Zerstörung von Nitrosaminen für die Aufreinigung eines mit Nitrosaminen verunreinigten Lösungsmittels einsetzbar ist. Durch eine günstige Wahl von Temperatur T und Vereilzeit t ist ein optimales Verhältnis von Abbau der Nitrosamine und dem Erhalt der Amine einstellbar.

Durch die Erfindung werden die Nitrosamine im Prozess zerstört, sodass eine Minimierung der durch das Rauchgas ausgetragenen Nitrosamine erreicht wird. Da eine aufwendige Entsorgung der Nitrosamine vermieden wird, lässt sich eine Prozessanlage, bei der die Nitrosamine gemäß der Lehre der Erfindung zerstört werden, ohne eine Kostenaufwendige Entsorgung der mit Nitrosaminen belasteten Lösungsmittel oder Abfallprodukte betreiben. Alles in allem wird durch die Erfindung der Aufwand für besondere Maßnahmen im Umgang mit dem nitrosaminhaltigen Lösungsmittel reduziert.

Besonders effektiv findet die thermische Zerstörung bei einer Temperatur T zwischen 120 °C und 360 °C statt. Die Höhe der Temperatur T ist dabei abhängig von der verwendeten Aminosäure. In Abhängigkeit von der Temperatur T wird vorteilhafterweise die Verweilzeit t zwischen 2 und 1600 Minuten gewählt, wobei natürlich auch längere Verweilzeiten möglich sind. Die thermische Behandlung findet vorzugsweise in einem geschlossenen Behälter und unter Überdruck statt.

Bei einer vorteilhaften Weiterentwicklung des Verfahrens wird dem mit Nitrosaminen verunreinigten Produkt vor der Aufreinigung eine Lauge zugeführt wird, sodass der pH-Wert des verunreinigten Produktes auf zwischen 8 und 14 eingestellt wird. Diese Weiterentwicklung geht von der Erkenntnis aus, dass einige Aminosäuren mit steigendem pH-Werten besonders stabil gegen Erwärmung sind. Dadurch lässt sich die Temperatur T erhöhen und die Verweilzeit t reduzieren, was zu einer Beschleunigung des Verfahrens führt. Kaliumhydroxid KOH bietet sich als besonders starke Lauge vorteilhaft zur Anhebung des pH-Wertes an. Denn im CO₂ Capture-Prozess muss unter anderem auch SOₓ in Form von K₂SO₄ abgetrennt werden. Dadurch würde der Prozess kontinuierlich an Kalium verarmen. Durch eine Zugabe von Kaliumhydroxid KOH in dem Maße, wie Kalium mit dem K₂SO₄ entfernt wird, kann einerseits die Konzentration an Kalium gehalten werden, und zudem der pH-Wert erhöht werden. Die Tatsache, dass einige Aminosäuren mit steigend pH-Wert besonders stabil gegen Erwärmung sind, bedeutet im Umkehrschluss, dass das für das Verfahren herangezogene mit Nitrosaminen verunreinigte Produkt vorzugsweise an einer Stelle der Prozessanlage entnommen wird, an der es einen eher höheren pH-Wert aufweist. Daher wird vorzugsweise ein Produkt für das Verfahren verwendet, welches frei von Säuren und insbesondere weitgehend von Kohlendioxid befreit ist.

In dem erfindungsgemäßen Verfahren handelt es sich bei dem verunreinigten Produkt um ein Lösungsmittel, dass aus einem CO₂ Capture-Prozess einer fossil befeuerten Kraftwerksanlage entnommen wird, wobei das verunreinigte Lösungsmittel mindestens die Konzentration an Nitrosamin enthält, die im CO₂ Capture-Prozess gebildet wird. Das Verfahren findet dabei parallel zum CO₂ Capture-Prozess statt. Dem CO₂ Capture-Prozess wird demnach ein permanenter Lösungsmittelstrom abgezweigt und gemäß dem Verfahren Aufgereinigt.

Alternativ lässt sich das Verfahren auch bei der Wiederaufbereitung eines Abfallproduktes einsetzen. Bei dem verunreinigten Produkt handelt es sich dann um ein mit Nitrosaminen verunreinigtes Abfallprodukt, dass beispielsweise bei der Wiederaufbereitung (Reclaiming) eines mit Stickoxiden NOx und/oder Schwefeloxiden SOx mit verunreinigten Lösungsmittels aus einem CO2 Capture-Prozess gebildet wird. Das Abfallprodukt ist dabei oft mit Nitrosaminen aufkonzentriert oder auch gesättigt. Das Verfahren lässt sich auch bei anderen wiederaufbereitungsverfahren zur Zerstörung der Nitrosamine einsetzen. Nach ausreichender Verweilzeit wird das weitgehend nitrosaminfreie Abfallprodukt abgekühlt und kann konventionell entsorgt werden. Durch die thermische Behandlung von Abfallprodukten ist zudem deren Handhabung wesentlich einfacher.

Das Verfahren lässt sich in einer anderen vorteilhaften Anwendung auch in einer Weise Betreiben, bei der das verunreinigte Produkt chargenweise entnommen und aufbereitet wird. Dadurch wird der Aufreinigungsprozess von dem CO₂ Capture-Prozess getrennt gesteuert. Dies ist vor allem dann von Vorteil, wenn die Aufreinigung und der CO₂ Capture-Prozess nicht am gleichen Ort stattfinden. Die chargenweise Aufbereitung ist auch dann von Vorteil, wenn der Aufreinigungsprozess in einem zeitlichen Bereich durchgeführt wird, in dem die fossil befeuerte Kraftwerksanlage eine geringere Leistung als die Nennleistung zu erbringen hat. Dies ist beispielsweise nachts der Fall, wenn der Kraftwerksanlage weniger Leistung abverlangt wird und somit ungenutzte Leistungsreserven zur Verfügung stehen. Die nun nicht benötigte Leistung kann für den Aufreinigungsprozess verwendet werden.

Besonders vorteilhaft hat sich die Verwendung von Aminosäuresalz als aktive Waschsubstanz in wässriger Lösung als Lösungsmittel erwiesen. Aminosäuresalze haben keinen nachweisbaren Dampfdruck und eignen sich daher vorteilhaft für die Rauchgaswäsche.

Die auf eine Vorrichtung gerichtete Aufgabe der Erfindung wird gelöst durch die Merkmale des Patentanspruchs 12.

Die Vorrichtung zum Regenieren eines mit Nitrosamin verunreinigten Produktes aus einer Kohlendioxid-Abscheidevorrichtung umfassend dabei einen Absorber und einen Desorber, wie sie in derzeitigen CO₂ Capture-Anlagen Anwendung finden. Absorber und Desorber sind durch eine Leitung für ein beladenes Lösungsmittel und eine Leitung für ein regeneriertes Lösungsmittel miteinander verbunden. Durch die Leitungen wird ein Lösungsmittelkreislauf zwischen Absorber und Desorber gebildet. Erfindungsgemäß wird nun an eine der Leitungen des Lösungsmittelkreislaufes ein thermischer Reaktor angeschlossen, an dem das Verfahren nach Anspruch 1 ausführbar ist. Der thermische Reaktor ist vorzugsweise ein Druckbehälter, in dem sich Temperaturen von zwischen 120 °C und 360 °C einstellen lassen.

Erfindungsgemäß wird der thermische Reaktor an die Leitung für ein regeneriertes Lösungsmittel angeschlossen, sodass dem thermischen Reaktor ein Lösungsmittel zuführbar ist, welches weitgehend frei von Kohlendioxid ist. Die Leitung für ein regeneriertes Lösungsmittel verlässt den Desorber am unteren Ende, also am Sumpf des Desorbers. Erfindungsgemäß wird dem regenerierten Lösungsmittel dabei lediglich ein Seitenstrom entnommen. Dadurch wird die CO₂ Capture-Anlage nicht zu sehr beeinflusst.

In einer vorteilhaften Ausgestaltung der Kohlendioxid-Abscheidevorrichtung weist der thermische Reaktor eine Dampfzuführleitung auf, sodass zur Beheizung des thermischen Reaktors Dampf aus einem Dampferzeugerprozess eines Dampfkraftwerks zuführbar ist. Somit kann der thermische Reaktor mit in eine Kraftwerksanlage integriert werden.

Der thermische Reaktor weist zudem auch eine Zuführleitung auf, durch welche dem thermischen Reaktor eine Lauge zuführbar ist.

Ableitend ist der thermische Reaktor an den Desorber angeschlossen, sodass dem Desorber ein von Nitrosaminen aufgereinigtes Lösungsmittel zuführbar ist. Dadurch kann die thermische Energie, die nach der thermischen Behandlung der Nitrosamine vorliegt, im Desorber abgegeben werden und weiterhin einen Beitrag zum Strippen leisten.

Nachfolgend werden Ausführungsbeispiele der Erfindung anhand von Figuren näher erläutert. Darin zeigt:
- FIG 1: ein Prozessschaltbild eines Verfahrens zum Aufreinigen eines mit Nitrosamin verunreinigten Produktes mit einer Prozessanlage,
- FIG 2: ein Diagramm mit typischen Abbauraten von Nitrosaminen und Aminosäuren,
- FIG 3: eine CO₂ Capture-Anlage mit einem angeschlossnem thermischen Reaktor,
- FIG 4: ein Reaktionsschaubild mit einer beispielhaften Bildung einer stabilen Nitrosaminverbindung,
- FIG 5: ein Reaktionsschaubild mit einer beispielhaften thermischen Behandlung einer stabilen Nitrosaminverbindung.

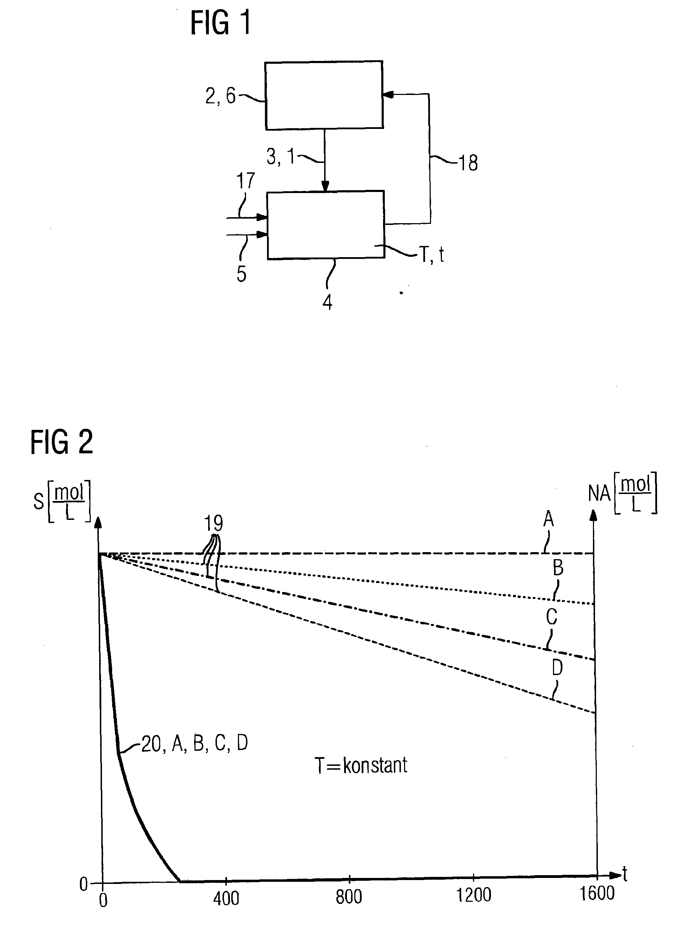

FIG 1 zeigt ein Verfahren 4 zum Aufreinigen eines mit Nitrosaminen verunreinigten Produktes 1 mit einer Prozessanlage 2 in der Darstellung eines Prozessschaltbildes. Aus der Prozessanlage 2, die beispielsweise ein CO₂ Capture-Prozess 6 sein kann, wird ein mit Nitrosaminen verunreinigten Produkt 1 ausgeleitet und dem Verfahren 4 zur Aufreinigung zugeführt. Das Produkt ist beispielsweise ein Waschmittel zur nasschemischen Wäsche von Kohlendioxid aus einem CO₂ Capture-Prozess 6, das vorzugsweise ein Lösungsmittel mit einer Aminosäure als aktive Waschsubstanz ist.

Bei dem Verfahren 4 werden die in dem verunreinigten Produkt 1 enthaltenen Nitrosamine thermisch zerstört. Die Reaktionsprodukte der thermischen Behandlung sind für Organismen gesundheitlich unkritisch. Um das verunreinigte Produkt 1 zu erwärmen sieht das Verfahren 4 die Zuführung eines Wärmestroms 17 vor. Das verunreinigte Produkt 1 wird dadurch auf eine Temperatur T erwärmt, die höher ist, als die Temperatur, der das verunreinigte Produkt in der Prozessanlage ausgesetzt ist.

Es hat sich gezeigt, dass schon bei einer Temperatur ab 120 °C eine effektive Zerstörung von Nitrosaminen einsetzt. Mit steigender Temperatur wird dieser Prozess beschleunigt. Da die in dem verunreinigten Produkt 1 enthaltenen Aminosäuren jedoch auch nur begrenzt thermisch stabil sind, kann die Temperatur T nicht frei gewählt werden. In Abhängigkeit der verwendeten Aminosäure muss daher eine Temperatur T gewählt werden, bei der es noch nicht zu einer Beschädigung der Aminosäure kommt, die jedoch ausreicht, um eine effektive Zerstörung der Nitrosamine zu bewirken.

Als Besonders effektiv hat sich die Verwendung von Aminosäuresalz als aktive Waschsubstanz bewiesen, da es bei einem hohen pH-Wert besonders stabil gegen Erwärmung ist. Um den pH-Wert anzuheben sieht das Verfahren die Zuführung einer Lauge 5 vor. Bereits bei einem pH-Wert von 8 und höher, ist eine signifikante Steigerung der thermischen Stabilität nachweisbar. Bei dem Verfahren 1 wird durch Zugabe der Lauge 5 vorzugsweise ein möglichst hoher pH-Wert von zwischen 11 und 14 eingestellt. Bei diesem pH-Wert lassen sich bei der Verwendung eines Aminosäuresalz-basierten Lösungsmittels Temperaturen T von zwischen 200 und 300 °C einstellen, ohne dass das Aminosäuresalz geschädigt wird.

Die Temperatur T, auf die das verunreinigte Produkt erwärmt wird, wird für eine Verweilzeit t gehalten. Diese Verweilzeit t entspricht der Zeit, nach der die Verunreinigungen, also die Nitrosamine, weitgehend thermisch zerstört wurden. Das nun aufgereinigte Produkt 18 kann wie in FIG 1 dargestellt, wieder in die Prozessanlage zurück geführt werden. Nicht dargestellt ist die alternative Entsorgung oder anderweitige Weiterverarbeitung.

In FIG 2 sind typische Abbauraten von Nitrosaminen 20 und Aminosäuresalz 19 bei unterschiedlichen pH-Werten in einem schematischen Diagramm dargestellt. Auf der linken Ordinate ist die Menge an Aminosäure S in mol pro Liter des Lösungsmittels aufgetragen. Die rechte Ordinate bezeichnet die Menge an Nitrosaminen NA, ebenfalls in mol pro Liter. Auf der Abszisse ist die Verweilzeit t aufgetragen. Untersucht wurde hier das Verhalten eines von mit Nitrosaminen verunreinigten Lösungsmittels mit Aminosäuresalz als aktivem Zusatzstoff. Untersucht wurde das Lösungsmittel bei unterschiedlichen pH-Konzentrationen. Die Kurven A bis D zeigen die Abbauraten bei unterschiedlichen pH-Werten. Die Kurve A entspricht einem pH-Wert von größer 12. Die Kurve B einem pH-Wert von 11, C einem pH-Wert von 10 und D einem pH-Wert von 9.

FIG 2 zeigt, dass die Abbauraten von Nitrosaminen 20 bei den unterschiedlichen pH-Werten A, B, C und D nahezu gleich sind. Hingegen sind die Abbauraten von Aminosäuresalz 19 abhängig vom pH-Wert. Zu erkennen ist, dass mit sinkendem pH-Wert die Abbaurate steigt. Die Abbaurate von Aminosäuresalz 19 zeigt bei einem pH-Wert von größer 12 (Kurve A) nahezu keine Abbaurate. Das Aminosäuresalz 19 bleibt als waschaktive Substanz weitgehend im Lösungsmittel erhalten. Bei einem pH-Wert von 11 (Kurve B) findet bereits ein nachweisbarer Abbau des Aminosäuresalzes 19 statt, der mit zunehmender Verweilzeit t bereits nennenswert das Lösungsmittel schädigt. Noch stärker ist die Schädigung des Aminosäuresalzes 19 bei entsprechender Verweilzeit t bei einem noch niedrigeren pH-Wert. So Zeigt Kurve C (pH-Wert 10) und Kurve D (pH-Wert 9) durch den Abbau des Aminosäuresalzes 19 bereits eine erhebliche Schädigung des Lösungsmittels.

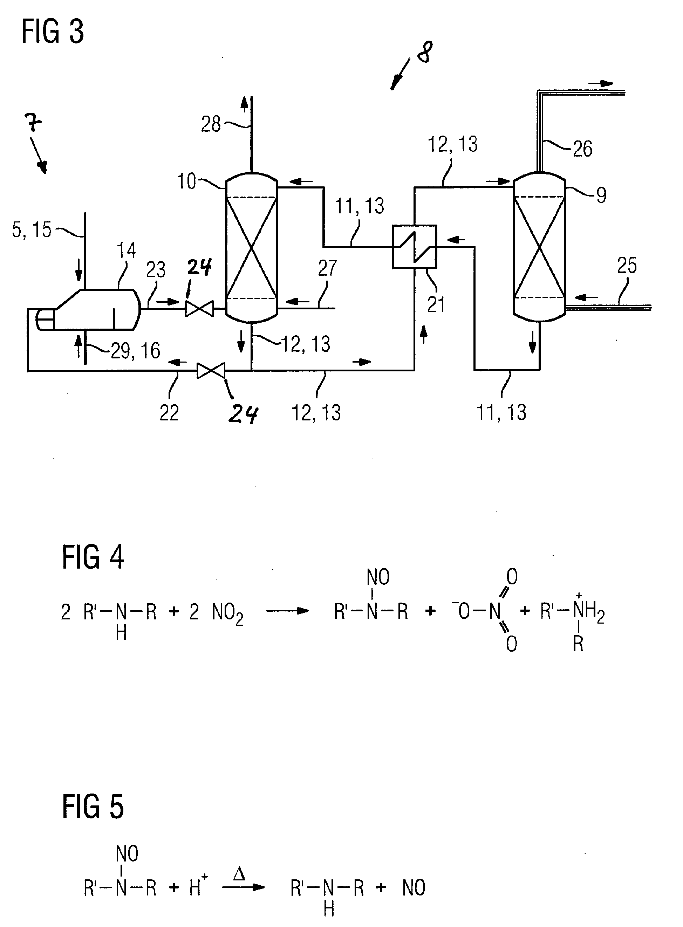

In FIG 3 ist eine CO₂ Capture-Anlage 8 mit einem angeschlossnem thermischen Reaktor 14 dargestellt. Die CO₂ Capture-Anlage 8 besteht im Wesentlichen aus einem Absorber 9 und einem Desorber 10, sowie einer Leitung 11 für ein beladenes Lösungsmittel und einer Leitung 12 für ein regeneriertes Lösungsmittel die zusammen einen Lösungsmittelkreislauf 13 für ein Lösungsmittel bilden. In den Lösungsmittelkreislauf ist ein Kreuzstromwärmetauscher 21 geschaltet, durch den Wärme von dem regenerierten Lösungsmittel auf das beladene Lösungsmittel 11 übertragbar ist. Nicht dargestellt sind hier weitere Wärmetauscher zur Erwärmung oder Abkühlung des Lösungsmittelstromes, die an unterschiedlichen Stellen des Lösungsmittelkreislaufes 13 weiterhin zweckmäßigerweise eingesetzt werden. Ebenso wurde darauf verzichtet, für die Veranschaulichung der Erfindung nicht relevante Zusatzkomponenten, wie Pumpen, Messfühler oder Steuer- und Regelvorrichtungen darzustellen.

Dem Absorber wird im unteren Bereich ein CO₂-haltiges Rauchgas 25 zugeführt, das aus einer fossil befeuerten Kraftwerksanlage stammt. Derartige Rauchgase 25 enthalten neben CO₂ auch Verbindungen wie N₂, O₂, SOₓ und NOₓ, die mit in die CO₂ Capture-Anlage 8 eingebracht werden. Im oberen Bereich des Absorbers 9 wird ein im Wesentlichen von CO₂ befreites Rauchgas 26 ausgeleitet, das neben anderen Rauchgaskomponenten noch N₂ und O₂ enthält.

In dem Absorber 9 wird CO2 durch ein Lösungsmittel nasschemisch herausgewaschen. Zur Erhöhung der Kapazität des Lösungsmittels ist in dem Lösungsmittel ein Amin (Aminosäure oder Aminosäuresalz) gelöst. Die Amine in dem Lösungsmittel bilden zusammen mit dem NOₓ aus dem Rauchgas Nitrosamine. Über die Leitung 11 wird das beladene, und mit Nitrosminen verunreinigte Lösungsmittel in den oberen Bereich des Desorbers 10 geleitet. In dem Desorber 10 wird unter Zuführung von Wärme 27, beispielsweise in Form von Heizdampf, das Lösungsmittel gestrippt, bzw. das CO₂ aus dem Lösungsmittel ausgekocht. Am Kopf des Deosrber 10 wird ein Brüdendampf ausgeleitet, der aus gasförmigem CO₂ und verdampfen Dampf besteht. Im unteren Bereich wird das nun weitgehend von CO2 befreite, aber noch mit Nitrosaminen verunreinigte Lösungsmittel über die Leitung 12 ausgeleitet.

An die Leitung 12 ist über eine Zuführleitung 22 der thermische Reaktor 14 angeschlossen. Dem thermischen Reaktor 14 ist über eine Dampfzuführleitung 16 Heizenergie 29 zuführbar. Über eine Leitung 15 ist dem thermischen Reaktor 14 eine Lauge 5 zuführbar. Durch die Beheizung des Lösungsmittels bei einer eingestellten Temperatur T für eine Verweilzeit t werden die Nitrosamine in dem Lösungsmittel weitgehend thermisch zerstört und zerfallen in für den Organismus unbedenkliche Produkte. Über eine Abführleitung 23, die den thermischen Reaktor mit dem Desorber 10 verbindet, ist dem Desorber ein regeneriertes und von Nitrosamin-Verunreinigungen weitgehend befreites Lösungsmittel rückführbar. Durch die Rückführung des im thermischen Reaktor 14 behandelten Lösungsmittels in den Desorber 10 kann die Wärme aus dem überhitzten Lösungsmittel für die Desorption wieder gewonnen werden. Alternativ kann der thermische Reaktor 14 auch in die oder parallel zu der Leitung 12 geschaltet werden.

In die Zuführleitung 22 und in die Abführleitung 23 kann jeweils ein Regelventil 24 geschaltet sein, durch die sich der thermische Reaktor 14 von dem Lösungsmittelkreislauf 13 entkoppeln lässt. Dadurch ist eine chargenweise Aufbereitung des Lösungsmittels möglich.

FIG 4 zeigt ein Reaktionsschaubild mit einer beispielhaften Bildung einer stabilen Nitrosaminverbindung aus einem sekundären Amin und Stickstoffdioxid. Bei dem Amin kann es sich um ein Alkanolamin, eine Aminosäure oder ein Aminosäuresalz handeln. Die gebildete Nitrosaminverbindung ist unter den Bedingungen des CO₂ Capture-Prozesses stabil. R kann für einen Aryl oder Alkylrest steht. R' kann ein Aryl, Alkyl, oder eine Deprotonierte Säure mit entsprechendem Kation sein.

In FIG 5 ist nun in einem Reaktionsschaubild die erfindungsgemäße thermische Behandlung einer stabilen Nitrosaminverbindung dargestellt. Die aus einer sekundären Aminosäure gebildete stabile Nitrosaminverbindung zerfällt durch die Zufuhr von Wärme in für den menschlichen Organismus unbedenkliche Produkte.

## Patentansprüche

1. Verfahren zum Aufreinigen eines mit Nitrosaminen verunreinigten Lösungsmittels (3) als Produkt (1) einer CO2-Capture-Anlage (8) einer fossil befeuerten Kraftwerksanlage, umfassend einen Absorber (9) und einen Desorber (10), die durch eine Leitung (11) für ein beladenes Lösungsmittel und eine Leitung (12) für ein regeneriertes Lösungsmittel derart miteinander verbunden sind, dass ein Lösungsmittelkreislauf (13) zwischen Absorber (9) und Desorber (10) gebildet ist, wobei an eine Leitung (11, 12) des Lösungsmittelkreislaufes (13) ein thermischer Reaktor (14) angeschlossen ist, in dem das verunreinigte Produkt (1) auf eine Temperatur T erwärmt wird, **dadurch gekennzeichnet, dass** die Nitrosamine thermisch zerstört werden, wobei die Temperatur T höher ist als die maximale Temperatur in der CO2-Capture-Anlage (8), und bei dem die Temperatur T für eine Verweilzeit t gehalten wird und wobei das verunreinigte Lösungsmittel (3) mindestens die Konzentration an Nitrosamin enthält, die im CO₂ Capture-Prozess (6) gebildet wird.

2. Verfahren nach Anspruch 1, wobei die Temperatur T zwischen 120 °C und 360 °C eingestellt wird.

3. Verfahren nach einem der Ansprüche 1 oder 2, wobei die Verweilzeit t zwischen 2 und 1600 Minuten eingestellt wird.

4. Verfahren nach einem der Ansprüche 1 bis 3, wobei dem verunreinigten Produkt vor der Aufreinigung eine Lauge (5) zugeführt wird, sodass der pH-Wert des verunreinigten Produktes auf zwischen 8 und 14 eingestellt wird.

5. Verfahren nach Anspruch 4, wobei als Lauge (5) Kaliumhydroxid KOH zugeführt wird.

6. Verfahren nach einem der Ansprüche 1 bis 5, wobei das verunreinigte Produkt (1) weitgehend von Kohlendioxid befreit ist.

7. Verfahren nach einem der Ansprüche 1 bis 6, wobei es sich bei dem verunreinigten Produkt (1) um ein mit Nitrosaminen verunreinigtes Abfallprodukt handelt, dass bei der Wiederaufbereitung eines mit Stickoxiden NOx und/oder mit Schwefeloxiden SOx verunreinigten Lösungsmittels (3) aus einem CO2 Capture-Prozess (6) gebildet wird.

8. Verfahren nach einem der Ansprüche 1 oder 7, bei dem das verunreinigte Produkt (1) dem CO₂ Capture-Prozess (6) chargenweise entnommen und aufbereitet wird.

9. Verfahren nach Anspruch 8, wobei die chargenweisen Aufbereitung in einem zeitlichen Bereich durchgeführt wird, in dem die fossil befeuerte Kraftwerksanlage eine Leistung von weniger als die Nennleistung zu erbringen hat.

10. Verfahren nach einem der Ansprüche 1 bis 9, wobei das Lösungsmittel (3) eine wässrige Lösung ist und ein Aminosäuresalz enthält.

11. Vorrichtung (7) zum Aufreinigen eines mit Nitrosaminen verunreinigten Lösungsmittels (3), als Produkt (1) einer CO₂ Capture-Anlage (8), die Bestandteil einer fossil befeuerten Kraftwerksanlage ist, umfassend einen Absorber (9) und einen Desorber (10), die durch eine Leitung (11) für ein beladenes Lösungsmittel und eine Leitung (12) für ein regeneriertes Lösungsmittel derart miteinander verbunden sind, dass ein Lösungsmittelkreislauf (13) zwischen Absorber (9) und Desorber (10) gebildet ist und
an eine Leitung (11, 12) des Lösungsmittelkreislaufes (13) ein thermischer Reaktor (14) angeschlossen ist,
**dadurch gekennzeichnet, dass** der thermische Reaktor (14) eine Zuführleitung (15) für Lauge (5) aufweist, so dass ein Verfahren zur thermischen Zerstörung der Nitrosamine gemäß Anspruch 1 ausführbar ist.

12. Vorrichtung (7) nach Anspruch 11, **dadurch gekennzeichnet, dass** der thermische Reaktor (14) an die Leitung (12) für ein regeneriertes Lösungsmittel angeschlossen ist, sodass dem thermischen Reaktor (14) ein Lösungsmittel zuführbar ist, welches weitgehend frei von Kohlendioxid ist.

13. Vorrichtung (7) nach einem der Ansprüch 11 oder 12, **dadurch gekennzeichnet, dass** dem thermischen Reaktor (14) über eine Dampfzuführleitung (16) Dampf aus einem Dampfkraftwerk zuführbar ist.

14. Vorrichtung (7) nach einem der Ansprüch 11 bis 13, **dadurch gekennzeichnet, dass** der thermische Reaktor (14) ableitend an den Desorber (10) angeschlossen ist, sodass dem Desorber (10) ein von Nitrosaminen aufgereinigtes Lösungsmittel (3) zuführbar ist.

## Claims

1. Process for purifying a solvent (3) contaminated with nitrosamines as product (1) from a CO₂ capture plant (8) in a fossil-fired power plant, comprising an absorber (9) and a desorber (10), which are connected to one another by a line (11) for a laden solvent and a line (12) for a regenerated solvent in such a way that a solvent circuit (13) is formed between absorber (9) and desorber (10), wherein a thermal reactor (14) is connected to a line (11, 12) in the solvent circuit (13), in which the contaminated product (1) is heated to a temperature T, **characterized in that** the nitrosamines are thermally destroyed, the temperature T being higher than the maximum temperature in the CO₂ capture plant (8), and in which the temperature T is maintained for a residence time t, and wherein the contaminated solvent (3) contains at least the concentration of nitrosamine which is formed in the CO₂ capture operation (6).

2. Process according to Claim 1, wherein the temperature T is set between 120°C and 360°C.

3. Process according to either of Claims 1 and 2, wherein the residence time t is set between 2 and 1600 minutes.

4. Process according to any of Claims 1 to 3, wherein an alkali (5) is supplied to the contaminated product before the purification, such that the pH of the contaminated product is adjusted to between 8 and 14.

5. Process according to Claim 4, wherein the alkali (5) supplied is potassium hydroxide KOH.

6. Process according to any of Claims 1 to 5, wherein the contaminated product (1) has been substantially freed of carbon dioxide.

7. Process according to any of Claims 1 to 6, wherein the contaminated product (1) is a nitrosamine-contaminated waste product which is formed in the reprocessing of a solvent (3) contaminated with nitrogen oxides NOx and/or with sulfur oxides SOx from a CO₂ capture operation (6).

8. Process according to either of Claims 1 and 7, in which the contaminated product (1) is taken batchwise from the CO₂ capture operation (6) and processed.

9. Process according to Claim 8, wherein the batchwise processing is performed within a time range in which the fossil-fired power plant has to provide an output of less than the nominal output.

10. Process according to any of Claims 1 to 9, wherein the solvent (3) is an aqueous solution and contains an amino acid salt.

11. Apparatus (7) for purifying a solvent (3) contaminated with nitrosamines, as product (1) from a CO₂ capture plant (8) which is part of a fossil-fired power plant, comprising an absorber (9) and a desorber (10), which are connected to one another by a line (11) for a laden solvent and a line (12) for a regenerated solvent in such a way that a solvent circuit (13) is formed between absorber (9) and desorber (10) and a thermal reactor (14) is connected to a line (11, 12) in the solvent circuit (13), **characterized in that** the thermal reactor (14) has a supply line (15) for alkali (5), such that it is possible to execute a process for thermally destroying the nitrosamines according to Claims 1.

12. Apparatus (7) according to Claim 11, **characterized in that** the thermal reactor (14) is connected to the line (12) for a regenerated solvent, such that it is possible to supply a solvent substantially free of carbon dioxide to the thermal reactor (14).

13. Apparatus (7) according to either of Claims 11 and 12, **characterized in that** steam from a steam power plant can be supplied to the thermal reactor (14) via a steam supply line (16).

14. Apparatus (7) according to any of Claims 11 to 13, **characterized in that** the thermal reactor (14) is connected by the output to the desorber (10), such that a solvent (3) purified to remove nitrosamines can be supplied to the desorber (10).

## Revendications

1. Procédé d'épuration d'un solvant ( 3 ) pollué par des amines nitrées, en tant que produit ( 1 ) d'une installation (8 ) de captage de CO₂, d'une centrale électrique alimentée en combustible fossile, comprenant un absorbeur ( 9 ) et un désorbeur ( 10 ) qui communiquent entre eux par un conduit ( 11 ) pour un solvant chargé et par un conduit ( 12 ) pour un solvant régénéré de manière à former un circuit ( 13 ) de solvant entre l'absorbeur ( 9 ) et le désorbeur ( 10 ), un réacteur ( 14 ) thermique étant raccordé à un conduit ( 11, 12 ) du circuit ( 13 ) de solvant, réacteur dans lequel le produit ( 1 ) pollué est porté à une température T, **caractérisé en ce que** l'on décompose thermiquement les amines nitrées, la température T étant plus haute que la température maximum dans l'installation ( 8 ) de captage de CO₂ et on maintient la température T pendant un temps t de séjour et le solvant ( 3 ) pollué contient au moins la concentration en amine nitrée qui se forme dans le processus ( 6 ) de captage de CO₂.

2. Procédé suivant la revendication 1, dans lequel on règle la température T entre 120°C et 360°C.

3. Procédé suivant l'une des revendications 1 ou 2, dans lequel on règle le temps t de séjour entre 2 et 1600 minutes.

4. Procédé suivant l'une des revendications 1 à 3, dans lequel on apporte au produit pollué avant l'épuration, une lessive ( 5 ) de manière à régler le pH du produit pollué entre 8 et 14.

5. Procédé suivant la revendication 4, dans lequel on apporte de l'hydroxyde de potassium KOH comme lessive ( 5 ).

6. Procédé suivant l'une des revendications 1 à 5, dans lequel le produit ( 1 ) pollué est sensiblement exempt de dioxyde de carbone.

7. Procédé suivant l'une des revendications 1 à 6, dans lequel le produit ( 1 ) pollué est un rebut pollué par des amines nitrées, qui se forme lors du retraitement d'un solvant ( 3 ) pollué par des oxydes d'azote NOₓ et/ou par des oxydes de soufre SOₓ, provenant d'un processus ( 6 ) de captage de CO₂.

8. Procédé suivant l'une des revendications 1 ou 7, dans lequel on soutire charge par charge le produit ( 1 ) pollué du processus ( 6 ) de captage de CO₂ et on le traite.

9. Procédé suivant la revendication 8, dans lequel on effectue le traitement charge par charge dans un laps de temps, dans lequel la centrale électrique alimentée en combustible fossile doit donner une puissance inférieure à la puissance nominale.

10. Procédé suivant l'une des revendications 1 à 9, dans lequel le solvant ( 3 ) est une solution aqueuse et contient un sel d'acide aminé.

11. Installation ( 7 ) d'épuration d'un solvant ( 3 ) pollué par des amines nitrées, comme produit d'une installation ( 8 ) de captage de CO₂, qui fait partie d'une centrale électrique alimentée en combustible fossile, comprenant un absorbeur ( 9 ) et un désorbeur ( 10 ) qui communiquent entre eux par un conduit ( 11 ) pour un solvant chargé et par un conduit ( 12 ) pour un solvant régénéré de manière à former un circuit ( 11 ) de solvant entre l'absorbeur ( 9 ) et le désorbeur ( 10 ) et un réacteur ( 14 ) thermique est raccordé à un conduit ( 11, 12 ) du circuit ( 13 ) de solvant,
**caractérisée en ce que** le réacteur ( 14 ) thermique a un conduit ( 15 ) d'apport de lessive ( 5 ) de manière à pouvoir effectuer un procédé de décomposition thermique des amines nitrées suivant la revendication 1.

12. Installation ( 7 ) suivant la revendication 11, **caractérisée en ce que** le réacteur ( 14 ) thermique est raccordé au conduit ( 12 ) pour un solvant régénéré de manière à pouvoir apporter au réacteur ( 14 ) thermique un solvant qui est dans une grande mesure exempt de dioxyde de carbone.

13. Installation ( 7 ) suivant l'une des revendications 11 ou 12, **caractérisée en ce que** de la vapeur d'une centrale à vapeur peut être apportée au réacteur ( 14 ) thermique par un conduit ( 16 ) d'apport de vapeur.

14. Installation ( 7 ) suivant l'une des revendications 11 à 13, **caractérisée en ce que** le réacteur ( 14 ) thermique est raccordé en dérivation du désorbeur ( 10 ) de manière à pouvoir apporter au désorbeur ( 10 ) un solvant ( 3 ) épuré d'amines nitrées.
